# EUROPEAN PATENT APPLICATION

(11) **EP 4 803 766 A1**
(43) Date of publication of application: **09.09.2026**
(21) Application number: 26150432.8
(22) Date of filing: 06.01.2026
(51) Int. Cl.: F16C 33/66, F16N 7/10

(54) **LUBRICATION INSERT FOR LUBRICATING SPINDLE BEARINGS**

(30) Priority: 06.03.2025 EP 25162030
(71) Applicant: United Machining Mill AG, 2504 Biel/Bienne (CH)
(72) Inventor: Reinhard, Edwin, 3362 Niederönz (CH); Fischle, Dominique Martin, 2540 Grenchen (CH)
(74) Representative: Arend, Christa

(57) **Abstract**

A lubrication insert, in particular for lubricating a spindle bearing, comprises:
a. an elongated body having a front end and a back end apart from each other and a curved circumferential surface extended between the front end and the back end, wherein an oil inlet is provided at the front end for connecting an oil supplying line for supplying the oil into the oil inlet, wherein at least one lubrication orifice is provided on the circumferential surface for distributing the oil in the radial direction, wherein a connecting channel is formed inside the body for connecting the oil inlet and the lubrication orifice;
b. at least one sealing element, in particular in the form of at least one O-ring, mounted on the outer surface of the body and positioned around the circumferential surface; and
c. a connecting element which is allocated to the body by an allocation mechanism, and the sealing element is pressed in the axial direction by the connecting element when the connecting element is allocated to the body.

## Description

The present invention is related to a lubrication insert for lubricating spindle bearings.

### TECHNICAL FIELD

Spindle bearings of high-speed and high-precision spindles must be lubricated continuously by an oil-air lubrication. The air serves as a transport medium for lubrication oil such that the oil flows continuously to the bearings. The quantity of the oil is controlled by a dispensing unit, which is normally arranged externally. It is relevant to continuously lubricate the bearings to avoid any temperature variation in the bearings because any temperature variation can directly lead to a reduction of the surface quality of the produced part.

In conventional spindles, several channels are formed in the spindle for example by drilling bores in the spindle to transport the oil from external oil supply device to the spindle bearing. Moreover, long oil lubrication channels are needed in the spindle such that the oil can reach the bearings. Since the oil flows directly in the channel, the channel must fulfill several requirements, e.g. the surface quality of the channel must be sufficient high to ensure the flow of the oil, a good sealing is needed and cleaning is necessary. However, manufacturing such channels is expensive and the maintenance of these long and narrow lubrication channels is difficult and time consuming.

Regarding the technological background of the present invention, reference can be made to CN 201884916 U, to CN 109296921 A, or to US 5,863,048.

### SUMMARY OF THE INVENTION

It is an objective of this invention to provide a lubrication insert which can be maintained in a simple manner. It is a further objective of this invention to provide a lubrication insert which can be simply mounted in the spindle.

According to the present invention, these objectives are achieved through the features of the independent claim. In addition, further advantageous embodiments follow from the dependent claims.

According to the present invention, a lubrication insert comprises an elongated body having a front end, a back end and a curved circumferential surface extended between the front end and the back end. The front end and the back end are arranged apart from each other and an oil inlet is provided at the front end for connecting an oil hose for supplying the oil into the oil inlet. At least one lubrication orifice is provided on the circumferential surface for distributing the oil in the radial direction. A connecting channel is formed inside the body for connecting the oil inlet and the lubrication orifice. The lubrication insert further comprises at least one sealing element, in particular in the form of at least one O-ring, mounted on the outer surface of the body and positioned around the circumferential surface. The lubrication insert comprises a connecting element which is allocated to the body by an allocation mechanism, and the sealing element is pressed in the axial direction by the connecting element when the connecting element is allocated, in particular coupled, to the body.

In some embodiments, a first protrusion and a second protrusion are formed on the circumferential surface of the body which stand out of the surface in the radial direction. A groove is formed between the first protrusion and the second protrusion along the peripheral direction and the lubrication orifice is provided in the groove.

The lubrication insert is applied for lubricating the spindle bearings. A lubrication channel is provided in the spindle. One end of the channel is accessible from the outside of the spindle and the other end of the channel is located in the proximity of the bearings. In the application, an oil supplying hose is connected to the lubrication insert, and the lubrication insert together with the oil supplying hose is inserted into the lubrication channel. By this way, the oil does not flow directly in the lubrication channel but flows in the supplying hose.

Additionally, the lubrication insert is positioned in a way in the channel that the lubrication orifice is positioned in the proximity of the bearing. The oil for lubrication is continuously supplied into the lubrication insert from an external device by applying compressed air. By this way, the oil flowing out of the oil orifice continuously lubricates the bearings. The positioning of the lubrication insert is ensured at the desired position by allocating, in particular connecting, the connecting element to the body. When the connecting element is mounted on the body, the body is fixed at the desired position. At the same time the sealing element is pressed in the axial direction and expanded in the radial direction for sealing the oil. Moreover, due to the radial expansion of the sealing device, the lubrication insert is clamped within the channel in the radial direction due to the friction between the inner surface of the lubrication channel and the sealing element.

This device has a simple design and provides a good sealing. Since the oil does not have any direct contact with the inner surface of the lubrication channel, the channel can be manufactured in a simple way. Additionally, no dirt or any particles resolved from the channel material can enter into the oil supplying hose; this reduces the cleaning effort and ensures a clean oil flow. The maintenance of the device is much easier. Additionally, the lubrication insert has a small dimension and can be mounted very closely to the bearings.

In a preferred variant, several oil orifices are provided on the outer surface of the body positioned in the groove. Through the multiple oil orifices, the oil can be distributed at different positions in the groove to ensure the desired quantity of the lubrication oil.

In an advantageous variant, the maximum diameter of the first protrusion and the maximum diameter of the second protrusion are same. These two protrusions can prevent the oil distributed in the groove from flowing out of the groove. In this way, a sealing is achieved.

In a further variant, a first stopper is formed on the circumferential surface of the body and the first stopper is a protrusion radially standing away from the circumferential surface of the body and has a stopping surface and a back surface on the opposite of the stopping surface. The first stopper serves for fixing the lubrication insert at the desired position.

In one variant, the stopping surface is pressed against the inner surface of the lubrication channel in which the lubrication insert is inserted. Preferably, the shape of the stopping surface is adapted to the shape of the inner surface of the lubrication channel.

In another variant, the stopping surface is pressed against a surface of the connecting element when it is connected to the body.

In particular, the first stopper is located between the front end and the first protrusion. The front end is defined as the end having the oil inlet. The oil supplying hose is connected to the oil inlet.

Preferably, the maximum diameter of the first stopper is smaller than the maximum diameter of the first protrusion.

In a preferred variant, the first sealing element, in particular in the form of an O-ring, sits between the first stopper and the first protrusion. When the connecting element is allocated, in particular connected or coupled, to the body, one surface of the first protrusion is pressed against the first sealing element. Since the maximum diameter of the first stopper is smaller than the maximum diameter of the first protrusion, the first sealing element can be pressed between the surface of the first protrusion and a second surface by allocating, in particular by connecting or coupling, the connecting element to the body. The second surface can be the inner surface of the lubrication channel, in which the lubrication insert is inserted, or the front surface of the connecting element. The pressed sealing element expands in the radial direction such that a sealing effect is provided.

In one variant, a second sealing element, in particular in the form of an O-ring, is arranged on the back side of the second protrusion, which is the opposite side of groove in the axial direction. When the contacting element is mounted on the body, the second sealing element is pressed against the surface of the second protrusion on the back side. The pressed sealing element expands in the radial direction such that it contacts the inner surface of the lubrication channel. Due to the friction between the sealing element and the inner surface of the lubrication channel, the lubrication insert is clamped at a desired position. Thus, the second sealing element provides also a clamping function besides the sealing function.

In a preferred variant, the maximum diameter of the back end is smaller than the maximum diameter of the second protrusion. The diameter of the body becomes smaller from the second protrusion toward the back end. The sealing element can be pressed between the surface of the second protrusion and another surface by allocating, in particular by connecting or coupling, the connecting element to the body. The other surface can be the inner surface of the lubrication channel, in which the lubrication insert is inserted, or the front surface of the connecting element.

Various allocation mechanisms, in particular connecting mechanisms, can be applied for the lubrication insert. Preferably, the allocation mechanism is a connecting mechanism, in particular with allocating the connecting element, for example in the form of at least one screw nut, to the body (20) by releasably connecting the connecting element to the body, with the sealing element being pressed in the axial direction by the connecting element when it is connected to the body.

In one variant, the connecting element features at least one thread on the inner, in particular circumferential, surface, serving as a female screw. Additionally, at least one thread is provided on the outer, in particular circumferential, surface of the body, in particular at the back end of the body. The lubrication insert is first inserted into the lubrication channel. Then the connecting element is mounted on the body by the screw connection between the inner surface of the connecting element and the outer surface of the body.

According to an alternative allocation mechanism, in particular to an alternative connecting mechanism, a force-fitting mechanism is applied to ensure a safe connecting and an easy handling.

In one alternative variant, the connecting element features at least one thread on the outer, in particular circumferential, surface for being allocated to the lubrication channel. Additionally, at least one thread is provided on the inner, in particular circumferential, surface of the lubrication channel, for example at the front section of the lubrication channel. The lubrication insert is first inserted into the lubrication channel. Then the connecting element is mounted on the body. By the screw connection between the outer surface of the connecting element and the inner surface of the lubrication channel, the lubrication insert is fixed at the desired position.

### BRIEF DESCRIPTION OF THE DRAWINGS

In the following a more particular description of the principles briefly described above will be rendered by reference to specific embodiments thereof, which are illustrated in the appended drawings. The principles of the disclosure are described and explained with additional detail by using the drawings in which:
- Fig. 1: is a three-dimensional view of the spindle;
- Fig. 2: is a three-dimensional view of the body of a lubrication insert;
- Fig. 3: is a sectional view of the lubrication insert used in a first embodiment or first variant;
- Fig. 4: is a three-dimensional view of the lubrication insert of Fig. 3;
- Fig. 5: is a sectional view of the lubrication insert of Fig. 3 and of Fig. 4 inserted in the spindle;
- Fig. 6: is a sectional view of the lubrication insert used in a second embodiment or second variant;
- Fig. 7: is a three-dimensional view of the lubrication insert of Fig. 6;
- Fig. 8: is a sectional view of the lubrication insert of Fig. 6 and of Fig. 7 inserted in the spindle.

### EXEMPLARY EMBODIMENTS

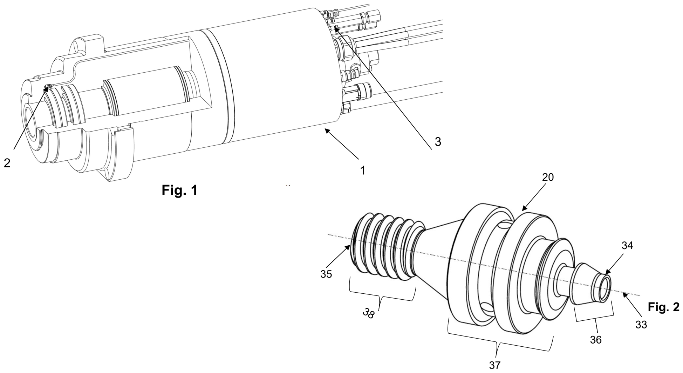

Fig. 1 illustrates a three-dimensional view of a spindle 1 with a lubrication insert 7 therein. A part of the spindle 1 is a cut view in order to show the bearing section 2 of the spindle 1 arranged inside the spindle 1. At the end of the spindle 1, oil hoses 3 are connected for supplying oil for lubricating the bearing 2.

Fig. 2 shows a three-dimensional view of a body 20 of a lubrication insert 7. It features a substantially cylindrical shape having different diameters at different sections. In particular, the body 20 is symmetrical to the longitudinal axis 33 of the body 20. It comprises a front end 34 and a back end 35. There are a connection region 36, a lubrication region 37 and a back region 38 between the front end 34 and the back end 35. The oil hose 3 for supplying the lubrication medium, in particular oil, can be connected to the connection region 36. The lubrication region 37 is for distributing the oil in the spindle bearing 2.

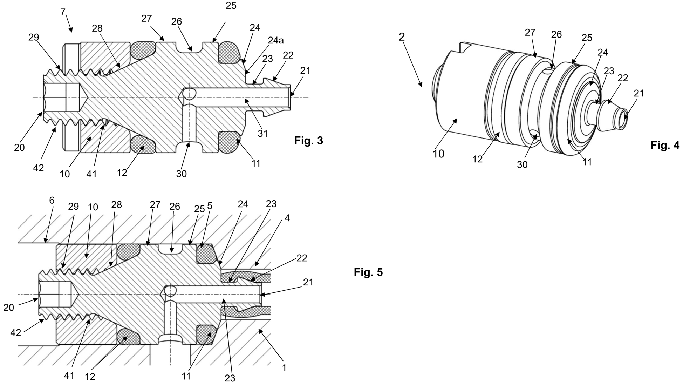

Fig. 3 illustrates a sectional view of the lubrication insert 7. The device comprises the body 20 and a connecting element 10 which can be removably mounted on the body 20. The body 20 comprises a front end (oil inlet 21), a first stopper 24, a first protrusion 25, a second protrusion 27, a rear section 28 and back end 29.

An oil inlet 21 is formed at the front end of the body 20, which is a bore in the axial direction. The front end is formed for connecting oil hose 3 on it. The front end includes a guiding section 22 starting from the front surface and an undercut section 23 at the rear part of the front end. The outer surface of the guiding section 22 has a tapered surface along the axial direction with an increased diameter from the oil inlet 21 toward the undercut section 23 of the front end. At the abut position between the guiding section 22 and the undercut 23, a trailing edge is formed. When the oil hose 3 is connected to the body 20, the hose 3 can easily slide along the outer surface of the guiding section 22 because of the tapering surface. The hose 3 is pushed forward until the end of the hose 3 overhangs behind the trailing edge.

The front end is followed by the first stopper 24. It has a larger outer diameter than the front end such that a stopper surface 24a is formed and exposed. The stopper surface 24a stands substantially in the radial direction of the body 20 and can be pressed against an inner surface of a lubrication channel formed in the proximity of the spindle bearing 2.

As shown in Fig. 5, in operation the lubrication insert 7 is inserted into the lubrication channel, which in this example comprises a front section 4, a middle section 5 and a back section 6. The diameters at different sections can vary. In this example, the diameter of the front section 4 is smaller than the diameter of the back section 6. In the middle section 5, the inner surface of the lubrication channel is inclined. The lubrication insert 7 is inserted into the lubrication channel until the first stopper 24 gets into contact with the inclined surface of the middle section 5 of the lubrication channel. The first stopper 24 has a shoulder on which a first sealing element 11 is mounted, the first sealing element 11 having the form of an O-ring.

In the lubrication region of the body 20, the first protrusion 25 and the second protrusion 27 are formed. A groove 26 is built between the first protrusion 25 and the second protrusion 27. The groove 26 is formed on the outer surface of the body 20. An oil channel 31 is formed inside the body 20 and connected to the oil inlet 21 arranged at one end of the body 20. At least one lubrication orifice or oil orifice 30 is formed in the groove 26 and connected to the oil channel 31 for distributing the oil supplied through the inlet 21 in the groove 26. In the embodiments shown, three orifices 30 are provided for distributing the oil in a symmetrical manner.

The second protrusion 27 is followed by a rearwardly tapering portion until the back end 29. A second sealing element 12 is mounted on the outer surface of the rear section 28, the second sealing element 12 having the form of an O-ring. For operation, the connecting element 10 is mounted from the back end 29 of the body 20 on the body 20. In particular, thread(s) 42 is (are) formed on the outer circumferential surface of the back end 29, and the connecting element 10 is a screw nut having thread(s) 41, particularly on its inner circumferential surface. When the connecting element 10 is screwed on the body 20, the connecting element 10 presses on the second sealing element 12 against the second protrusion 27, since the first stopper 24 is stopped by the inclined surface of the lubrication channel. On one side, the second sealing element 12 serves for sealing.

On the other side, the second sealing element 12 serves to clamp the lubrication insert 7 at the desired position. The second sealing element 12 expands in the radial direction when the connecting element 10 presses on it. Due to the friction between the second sealing element 12 and the inner surface of the back section 6 of the lubrication channel the second sealing element 12 is clamped at this position. Consequently, the lubrication insert 7 is kept at this position.

In other words, the connecting element 10 features the thread 41 on the inner surface, serving as a female screw. Additionally, the thread 42 is provided on the outer surface of the body 20, in particular at the back end 29 of the body 20, with thread 41 on the inner surface of the connecting element 10 having a function of counter-thread to thread 42 on the outer surface of the body 20.

The lubrication insert 7 is first inserted into the lubrication channel. Then the connecting element 10 is mounted on the body 20 by the screw connection between the inner surface of the connecting element 10 and the outer surface of the body 20. By said screw connection, the lubrication insert 7 is fixed at the desired position, with said screw connection being provided by thread 51 engaging with thread 52.

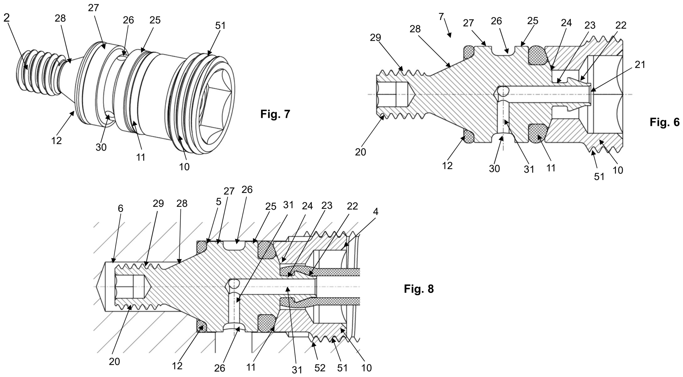

Fig. 6, Fig. 7 and Fig. 8 illustrate the lubrication insert 7 used in a second embodiment or second variant. The body 20 is constructed same as the body 20 of the first embodiment or first variant (cf. Fig. 3, Fig. 4, Fig. 5) of the lubrication insert 7. Only the allocation mechanism or connecting mechanism is different, namely in the form of a force-fitting mechanism. In the second embodiment, the connecting element 10 is coupled to the body 10 from the front end.

Fig. 6 illustrates a sectional view of the lubrication insert 7 in the connected state. Fig. 7 shows a three-dimensional view of the lubrication insert 7 in the connected state.

As shown in Fig. 8, this embodiment is applied for a different lubrication channel. In this application, the back section 6 of the lubrication channel has a smaller diameter than the front section 4, and the opening of the channel is at the front section 4. Thus, the lubrication insert 7 is inserted in the opposite direction, namely the lubrication insert 7 is inserted into the lubrication channel with the back end 29 in ahead. The lubrication insert 7 is pushed so far until the rear section 28 is stopped by the inner surface of the lubrication channel. In this example, the rear section 28 is stopped by the transition edge between the middle section 5 and the back section 6.

In this embodiment, the connecting element 10 features at least one thread 51 on the outer circumferential surface of the connecting element 10. On the inner circumferential surface of the lubrication channel, at least one thread 52 is formed as well. In the operation, the lubrication insert 7 is first inserted into the lubrication channel, then the connecting element 10 is mounted from the front end of the lubrication insert 7 on the body 20. The connecting element 10 is fixed at the desired position by the screw connecting. In the connected state, the front surface of the connecting element 10 presses on the first sealing element 11, the first sealing element 11 having the form of an O-ring. Additionally, the second sealing element 12 is pressed against the inner surface of the middle section 5 of the lubrication channel, the second sealing element 12 having the form of an O-ring.

In other words, the connecting element 10 features the thread 51 on the outer surface. Additionally, the thread 52 is provided on the inner surface of the lubrication channel, serving as a female screw, with thread 52 on the inner surface of the lubrication channel having a function of counter-thread to thread 51 on the outer surface of the connecting element 10.

The lubrication insert 7 is first inserted into the lubrication channel. Then the connecting element 10 is mounted on the body 20. By the screw connection between the outer surface of the connecting element 10 and the inner surface of the lubrication channel, the lubrication insert 7 is fixed at the desired position, with said screw connection being provided by thread 51 engaging with thread 52.

Finally, a particularly preferred option of the present invention is that a same design of the lubrication insert 7 can be used in both the first embodiment or first variant (cf. Fig. 3, Fig. 4, Fig. 5) and the second embodiment or second variant (cf. Fig. 6, Fig. 7, Fig. 8) wherein the manner, in which the lubrication insert 7 is clamped or fixed in the first embodiment or first variant (cf. Fig. 3, Fig. 4, Fig. 5), is different from the manner, in which the lubrication insert 7 is clamped or fixed in the second embodiment or second variant (cf. Fig. 6, Fig. 7, Fig. 8):

As explained above with regard to the first embodiment or first variant (cf. Fig. 3, Fig. 4, Fig. 5), the sealing elements 11, 12, i.e. the two O-rings can be clamped by the connecting element 10, i.e. by the nut arranged at the back end 35 (cf. Fig. 2) of the body 20, said nut 10 being internally threaded, i.e. comprising the internal thread 41 being screwable with the external thread 42 at the back end 29 of the body 20.

As to this first embodiment or first variant (cf. Fig. 3, Fig. 4, Fig. 5), it can be taken for example from Fig. 5 that the second sealing element 12, i.e. the second O-ring can be pressed or fastened by the connecting element 10, i.e. by the nut in a direct or immediate way against the second protrusion 27 (direct contact between the connecting element 10 and the second sealing element 12) whereas the first sealing element 11, i.e. the first O-ring can be pressed or fastened with the help of the connecting element 10, i.e. with the help of the nut in an indirect or non-immediate way against the first protrusion 25 (no direct contact between the connecting element 10 and the first sealing element 11).

Alternatively, and as explained above with regard to the second embodiment or second variant (cf. Fig. 6, Fig. 7, Fig. 8), the sealing elements 11, 12, i.e. the two O-rings can be clamped by the connecting element 10, i.e. by the nut located at the front end 34 (cf. Fig. 2) of the body 20, said nut 10 being externally threaded, i.e. comprising the external thread 51 being screwable with the internal thread 52 of the lubrication channel.

As to this second embodiment or second variant (cf. Fig. 6, Fig. 7, Fig. 8), it can be taken for example from Fig. 8 that the first sealing element 11, i.e. the first O-ring can be pressed or fastened by the connecting element 10, i.e. by the nut in a direct or immediate way against the first protrusion 25 (direct contact between the connecting element 10 and the first sealing element 11) whereas the second sealing element 12, i.e. the second O-ring can be pressed or fastened with the help of the connecting element 10, i.e. with the help of the nut in an indirect or non-immediate way against the second protrusion 27 (no direct contact between the connecting element 10 and the second sealing element 12).

Depending on the installation situation and/or depending on the space available for installation, the connecting element 10, i.e. the nut can therefore be arranged at the back end 35 of the body 20 (= first embodiment or first variant according to Fig. 3, Fig. 4, Fig. 5) or at the opposite, i.e. front end 34 of the body 20 (= second embodiment or second variant according to Fig. 6, Fig. 7, Fig. 8), preferably with the lubrication insert 7 having one and the same design in the first embodiment or first variant (cf. Fig. 3, Fig. 4, Fig. 5) and in the second embodiment or second variant (cf. Fig. 6, Fig. 7, Fig. 8) which offers considerable advantages in terms of cost as well as of ease of manufacture.

### LIST OF REFERENCE SIGNS

- 1: spindle
- 2: bearing section of spindle 1
- 3: oil hose, in particular oil supplying hose
- 4: front section of lubrication channel
- 5: middle section of lubrication channel
- 6: back section of lubrication channel
- 7: lubrication insert
- 10: connecting element, in particular screw nut
- 11: sealing element, in particular first sealing element, for example O-ring
- 12: second sealing element, in particular O-ring
- 20: body, in particular elongated body
- 21: oil inlet
- 22: guiding section of front end 34 of body 20
- 23: undercut section of front end 34 of body 20
- 24: first stopper
- 24a: stopper surface or stopping surface
- 25: first protrusion
- 26: groove
- 27: second protrusion
- 28: rear section of body 20
- 29: back end
- 30: lubrication orifice or oil orifice
- 31: oil channel
- 33: longitudinal axis of body 20
- 34: front end of body 20
- 35: back end of body 20
- 36: connection region
- 37: lubrication region
- 38: back region
- 41: thread on inner, in particular circumferential, surface of connecting element 10 (first variant: Fig. 3, Fig. 4, Fig. 5)
- 42: thread on outer, in particular circumferential, surface of body 20, in particular at back end 29 of body 20 (first variant: Fig. 3, Fig. 4, Fig. 5)
- 51: threads on outer, in particular circumferential, surface of connecting element 10 (second variant: Fig. 6, Fig. 7, Fig. 8)
- 52: threads on inner, in particular circumferential, surface of lubrication channel (second variant: Fig. 6, Fig. 7, Fig. 8)

## Claims

1. A lubrication insert (7), in particular for lubricating spindle bearing (2), comprising:
a. an elongated body (20) having a front end (34) and a back end (35) apart from each other and a curved circumferential surface extended between the front end (34) and the back end (35), wherein an oil inlet (21) is provided at the front end (34) for connecting an oil supplying hose (3) for supplying the oil into the oil inlet (21), wherein at least one lubrication orifice (30) is provided on the circumferential surface for distributing the oil in the radial direction, wherein an oil channel (31) is formed inside the body (20) for connecting the oil inlet (21) and the lubrication orifice (30);
b. at least one sealing element (11, 12), in particular in the form of at least one O-ring, mounted on the outer surface of the body (20) and positioned around the circumferential surface; and
c. a connecting element (10) which is allocated to the body (20) by an allocation mechanism, and the sealing element (11, 12) is pressed in the axial direction by the connecting element (10) when the connecting element (10) is allocated to the body (20).

2. The lubrication insert according to claim 1, wherein a first protrusion (25) and a second protrusion (27) are formed on the circumferential surface of the body (20) which stand out of the surface in the radial direction, wherein a groove (26) is formed between the first protrusion (25) and the second protrusion (27) along the peripheral direction and the lubrication orifice (30) is provided in the groove (26).

3. The lubrication insert according to claim 2, wherein the maximum diameter of the first protrusion (25) and the maximum diameter of the second protrusion (27) are same.

4. The lubrication insert according to at least one of claims 1 to 3, wherein a first stopper (24) is formed on the circumferential surface of the body (20) and the first stopper (24) is a protrusion radially standing out of the circumferential surface of the body (20) and has a stopping surface (24a) and a back surface on the opposite of the stopping surface (24a).

5. The lubrication insert according to claim 2 or 3 and to claim 4, wherein the first stopper (24) is located between the front end (34) and the first protrusion (25).

6. The lubrication insert according to claim 2 or 3 and to claim 4 or 5, wherein the maximum diameter of the first stopper (24) is smaller than the maximum diameter of the first protrusion (25).

7. The lubrication insert according to at least one of claims 4 to 6, wherein the maximum diameter of the front end (34) is smaller than the maximum diameter of the first stopper (24).

8. The lubrication insert according to claim 2 or 3 and to at least one of claims 4 to 7, wherein the first sealing element (11) sits between the first stopper (24) and the first protrusion (25).

9. The lubrication insert according to claim 2 or 3, wherein a second sealing element (12) is arranged on the back side of the second protrusion (27), which is the opposite side of the groove (26) in the axial direction, wherein the second sealing element (12) is pressed against the surface of the second protrusion (27) on the back side.

10. The lubrication insert according to claim 2 or 3, wherein the maximum diameter of the back end (35) is smaller than the maximum diameter of the second protrusion (27).

11. The lubrication insert according to one of claims 1 to 10, wherein the allocation mechanism is a connecting mechanism, in particular with allocating the connecting element (10), for example in the form of at least one screw nut, to the body (20) by releasably connecting the connecting element (10) to the body (20), with the sealing element (11, 12) being pressed in the axial direction by the connecting element (10) when it is connected to the body (20).

12. The lubrication insert according to claim 11, wherein the connecting element (10) comprises at least one thread (41) on the inner, in particular circumferential, surface for being allocated to at least one thread (42) on the outer, in particular circumferential, surface of the body (20), in particular at the back end (35) of the body (20).

13. The lubrication insert according to at least one of claims 1 to 12, wherein the allocation mechanism, in particular the connecting mechanism, is a force-fitting mechanism, in particular with the connecting element (10) comprising at least one thread (51) on the outer, for example circumferential, surface for being allocated to the lubrication channel, for example to at least one thread (52) on the inner, for example circumferential, surface of the lubrication channel, for example at the front section (4) of the lubrication channel.

14. The lubrication insert according to one of claims 1 to 13, wherein the body (20) has a cylindrical shape with different diameters at different positions along the axial direction.

15. The lubrication insert according to one of claims 1 to 14, wherein the connecting element (11) features a through hole in the axial direction.
